# EUROPEAN PATENT APPLICATION

(11) **EP 4 474 061 A2**
(43) Date of publication of application: **11.12.2024**
(21) Application number: 24173412.8
(22) Date of filing: 30.04.2024
(51) Int. Cl.: B04C 5/08, B04C 5/081, B04C 5/12, B04C 5/185

(54) **CYCLONE COLLECTOR FOR BATTERY PACK AND BATTERY DEVICE INCLUDING THE SAME**

(30) Priority: 06.06.2023 JP 2023092804
(71) Applicant: Prime Planet Energy & Solutions, Inc., Chuo-ku Tokyo 103-0022 (JP)
(72) Inventor: TAKAHASHI, Hiroki, Tokyo, 103-0022 (JP)
(74) Representative: Kuhnen & Wacker Patent- und Rechtsanwaltsbüro PartG mbB

(57) **Abstract**

The present disclosure provides a cyclone collector (30) to be used for a battery pack (10) including battery cells (12) and a pack case (14) housing the battery cells (12). The cyclone collector (30) is configured to, when gas (AF) containing dust is issued from at least one of the battery cells (12) inside the pack case (14), cause the gas (AF) discharged from the pack case (14) to produce a swirl flow so as to centrifuge the dust contained in the gas (AF).

## Description

### BACKGROUND OF THE DISCLOSURE

### 1. Field

The present disclosure relates to cyclone collectors for battery packs and battery devices including the cyclone collectors.

### 2. Background

Battery packs each including battery cells and a pack case housing the battery cells have conventionally been used as, for example, vehicle driving power sources. Although battery cells are usually sealed airtightly, a failure such as overcharging or a physical external force, for example, may impair airtightness of the battery cells, resulting in an issue of gas therefrom. Prior art documents related to such techniques include JP 2017-050055 A and JP 2022-126267 A. JP 2017-050055 A, for example, discloses a vehicle-mounted battery device including: battery cells including gas discharge valves through which gas generated inside the battery cells is to be discharged out of the battery cells; an exhaust gas passage through which the gas discharged from the gas exhaust valves is to be collected inside a pack case; and an exhaust duct which is connected to the exhaust gas passage and through which the gas collected is to be discharged out of a vehicle cabin.

### SUMMARY

Studies conducted by the inventor of the present disclosure suggest that gas issuing from battery cells may become a subsonic flow. Thus, gas issuing from battery cells may contain dust including, for example, the contents of the battery cells (e.g., a fragment of an active material layer), sparks, and/or soot. The arrangement disclosed in, for example, JP 2017-050055 A, however, discharges dust-containing gas directly out of the vehicle cabin through the exhaust duct. Unfortunately, together with the gas, dust may be discharged out of the vehicle cabin and scattered to the surroundings. Another disadvantage is that if the gas contains sparks, their heat may be transmitted to the surroundings.

Accordingly, embodiments of the present disclosure provide novel cyclone collectors for battery packs, each of which is able to prevent or reduce scattering of dust, and battery devices including the cyclone collectors.

An embodiment of the present disclosure provides a cyclone collector to be used for a battery pack including battery cells and a pack case housing the battery cells. The cyclone collector is configured to, when gas containing dust is issued from at least one of the battery cells inside the pack case, cause the gas discharged from the pack case to produce a swirl flow so as to centrifuge the dust contained in the gas.

The cyclone collector thus configured is able to separate dust contained in gas, making it possible to suitably prevent or reduce scattering of the dust. Preventing or reducing scattering of sparks, in particular, enables an improvement in safety of a battery pack.

The above and other elements, features, steps, characteristics, and advantages of the present disclosure will become more apparent from the following detailed description of the preferred embodiments with reference to the attached drawings.

### BRIEF DESCRIPTION OF THE DRAWINGS

FIG. 1 is a schematic side view of a battery device according to an embodiment of the present disclosure.
FIG. 2 is a schematic perspective view of a cyclone collector.
FIG. 3 is a schematic vertical sectional view of the cyclone collector.
FIG. 4 is a schematic transverse sectional view of a second swirl region.
FIG. 5 is a diagram illustrating flow lines of air currents according to the embodiment of the present disclosure.
FIGS. 6A to 6C are diagrams illustrating flow lines of dust according to the embodiment of the present disclosure.

### DETAILED DESCRIPTION OF THE PREFERRED EMBODIMENTS

Preferred embodiments of techniques disclosed herein will be described below with reference to the drawings. Matters other than those specified herein but necessary for carrying out the present disclosure may be understood by those skilled in the art as design matters based on techniques known in the related art. The present disclosure may be carried out on the basis of the description given herein and common technical knowledge in the related art.

### Battery Device

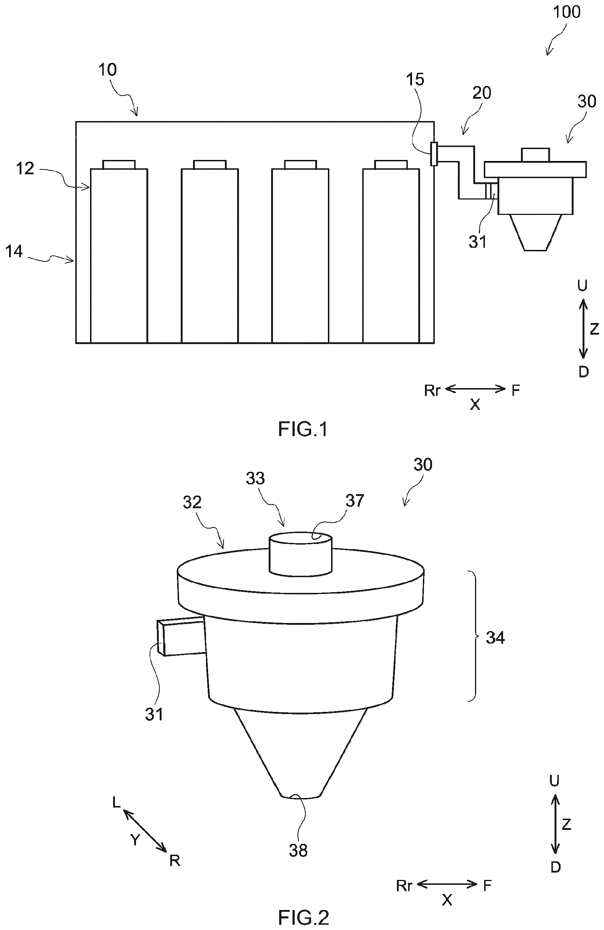

FIG. 1 is a schematic side view of a battery device 100. In the following description, the reference signs L, R, F, Rr, U, and D in the drawings respectively represent left, right, front, rear, up, and down. The reference sign X in the drawings represents a direction in which battery cells 12 are arranged (which will hereinafter be referred to as an "arrangement direction X"). The reference sign Y in the drawings represents a direction along the width of each battery cell 12 and perpendicular or substantially perpendicular to the arrangement direction X (which will hereinafter be referred to as a "width direction Y"). The reference sign Z in the drawings represents a direction along the height of each battery cell 12 and perpendicular or substantially perpendicular to the arrangement direction X and the width direction Y (which will hereinafter be referred to as an "up-down direction Z"). These directions, however, are defined merely for the sake of convenience of description and do not limit in any way how the battery device 100 may be installed. Each of the drawings is a schematic diagram and thus does not necessarily faithfully reflect actual shapes or dimensions of components of the battery device 100. In what follows, components and elements having the same functions are identified by the same reference signs, and description thereof may be simplified or omitted when deemed redundant.

As illustrated in FIG. 1, the battery device 100 includes a battery pack 10, an exhaust duct 20, and a cyclone collector 30. The exhaust duct 20 connects the battery pack 10 and the cyclone collector 30 to each other. The exhaust duct 20, however, is optional. In one example, the cyclone collector 30 may be directly attached to the battery pack 10.

The battery pack 10 includes the battery cells 12 and a pack case 14. In this embodiment, the battery cells 12 are arranged in the arrangement direction X. Although not illustrated, the battery cells 12 are electrically connected to each other. In this embodiment, the battery cells 12 are storage batteries. The battery cells 12 are, for example, lithium ion secondary batteries. Aa used herein, the term "storage battery" refers to any of various electricity storage devices, each of which is repeatedly chargeable and dischargeable. The term "storage battery" is a concept that subsumes not only secondary batteries, such as lithium ion secondary batteries and nickel-metal hydride batteries, but also capacitors, such as lithium ion capacitors.

Although not illustrated, the battery cells 12 each include: an electrode assembly including an electrode; an electrolyte; and a housing that contains the electrode assembly and the electrolyte. The battery cells 12 may be similar in structure to those known in the related art or any other suitable battery cells. The electrode of each battery cell 12 typically includes an active material layer containing an active material that is able to store and discharge charge carriers. In this embodiment, the battery cells 12 each have a flat cuboidal outer shape (or a flat rectangular outer shape) with a bottom. Each battery cell 12 does not necessarily have to have a rectangular shape but may have any other suitable shape, such as a circular cylindrical shape or a bag shape. The housing of each battery cell 12 may include a gas discharge valve that is activated upon an increase in internal pressure.

The battery cells 12 are usually sealed airtightly (or sealed hermetically). A failure such as overcharging or a physical external force, for example, may impair airtightness of the battery cell(s) 12, resulting in an issue of gas therefrom. The gas issuing from the battery cell(s) 12 may become a subsonic flow. Thus, the gas issuing from the battery cell(s) 12 may contain dust. As used herein, the term "dust" refers to solid floating matter in general having a particle diameter (or a secondary particle diameter) of about 100 µm or less (e.g., in the range of between about 1 µm and about 100 µm). The term "dust" is a concept that subsumes the contents of the battery cells 12 (e.g., a fragment of an active material layer), sparks, and soot.

The pack case 14 is a casing that houses the battery cells 12 placed in a predetermined arrangement. Together with the battery cells 12, any suitable component(s) may be housed in the pack case 14, examples of which include: a colling device, such as a cooling fan; a controller to control charging and discharging of the battery cells 12; and sensor(s) to measure, for example, currents through the battery cells 12, voltages across the battery cells 12, and/or temperatures of the battery cells 12. The pack case 14 is preferably higher in durability and shock resistance than the battery cells 12. The pack case 14 is preferably able to maintain its shape if gas is issued from the battery cell(s) 12. The pack case 14 is preferably made of a metallic material, such as aluminum, an aluminum alloy, iron, an iron alloy, or stainless steel. The pack case 14 is provided with an outlet 15 through which the pack case 14 is connected to the exhaust duct 20. Gas that has issued from the battery cell(s) 12 flows out of the pack case 14 into the exhaust duct 20 through the outlet 15.

The exhaust duct 20 defines a gas passage through which the outlet 15 of the pack case 14 is in communication with an inlet 31 of the cyclone collector 30. In this embodiment, the exhaust duct 20 includes bent portions. The bent portions facilitate producing a swirl flow in a swirl chamber 34 (which will be described below) of the cyclone collector 30. The bent portions also prevent an excessively large fragment (e.g., the contents of the battery cells 12) from entering the cyclone collector 30. As used herein, the term "bent" not only refers to being bent at a definite angle but also refers to being gradually bent into an arc shape. In other words, the term "bent" refers to any of a wide variety of non-straight shapes when viewed in cross section. Alternatively, the exhaust duct 20 may have a straight shape when viewed in cross section.

The exhaust duct 20 is preferably provided with a relief valve (or a pressure relief valve) that opens when a pressure inside the pack case 14 has exceeded a predetermined value. This enables communication between the pack case 14 and the cyclone collector 30 only when the pressure inside the pack case 14 has exceeded the predetermined value (i.e., only when a predetermined amount or more of gas has issued from the battery cell(s) 12). When necessary, the exhaust duct 20 may be provided with a valve member other than a relief valve, examples of which include a check valve such as one descried in, for example, JP 2017-050055 A.

### Cyclone Collector

When gas containing dust has issued from the battery cell(s) 12 inside the pack case 14, the cyclone collector 30 collects the dust from the gas. Specifically, the cyclone collector 30 causes dust-containing gas discharged from the battery cell(s) 12 to produce a swirl flow (which may also be referred to as, for example, a "spiral air current", a "tornado air current", or a "cyclone air current") so as to centrifuge and collect dust contained in the gas. In this embodiment, the cyclone collector 30 is out of communication with the pack case 14 at normal times. The cyclone collector 30 is configured to be in communication with the inside of the pack case 14 through the exhaust duct 20 upon opening of the relief valve.

In this embodiment, the cyclone collector 30 is a device through which gas flows in a passive manner. In other words, the cyclone collector 30 is a passive device. This eliminates the need to electrically control the cyclone collector 30 and thus makes it unnecessary to provide a sensor, a controller, or any other device for electric control of the cyclone collector 30. Accordingly, this embodiment enables the cyclone collector 30 to have a simple structure.

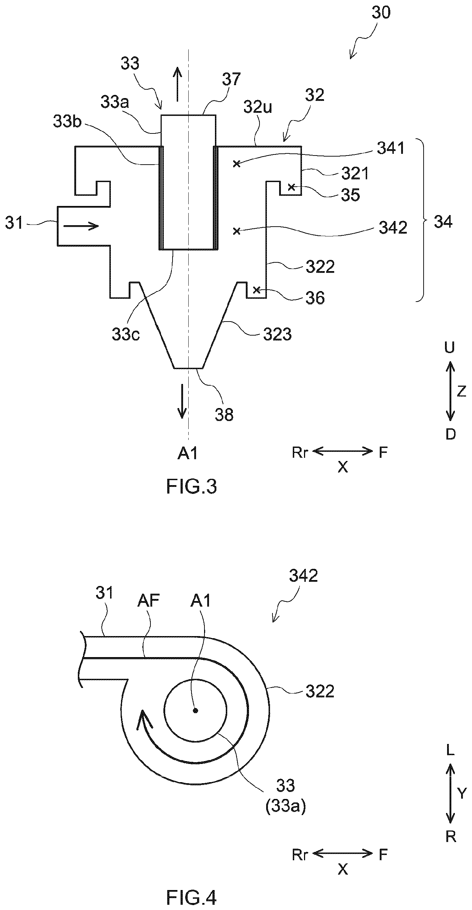

FIG. 2 is a perspective view of the cyclone collector 30. FIG. 3 is a vertical sectional view of the cyclone collector 30. In FIG. 3, the reference sign A1 represents an axis of an internal cylinder 33. The axis A1 extends in the up-down direction Z. As illustrated in FIG. 3, the cyclone collector 30 includes the inlet 31, a casing 32, the internal cylinder 33, the swirl chamber 34, two collecting portions 35 and 36, and two gas discharge ports 37 and 38. In this embodiment, the components of the cyclone collector 30 are integral with each other. As previously mentioned, gas issuing from the battery cell(s) 12 may contain sparks and/or soot. Accordingly, the components of the cyclone collector 30 are preferably made of a highly heat-resistant material, examples of which include metallic materials (such as iron, an iron alloy, stainless steel, and copper) and ceramic materials.

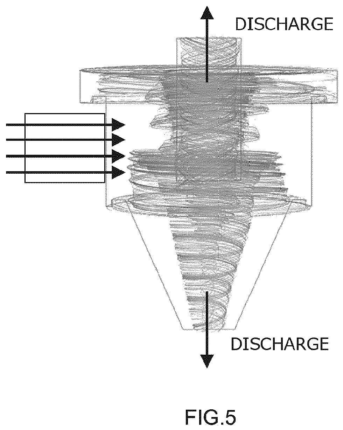

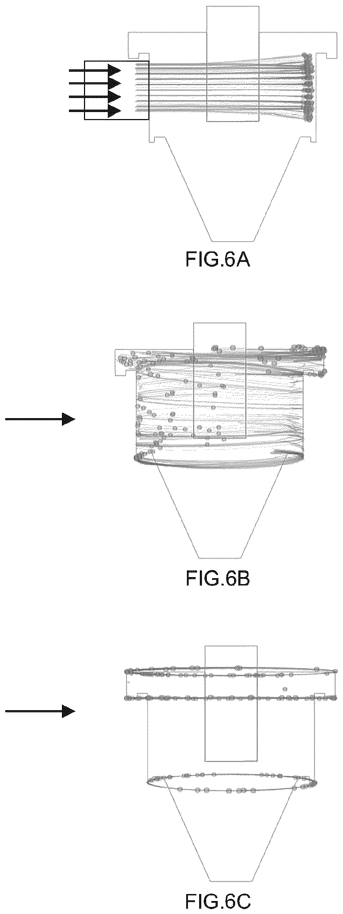

As illustrated in FIG. 1, the inlet 31 allows communication between the exhaust duct 20 and the swirl chamber 34. As illustrated in FIG. 3, dust-containing gas flows into the swirl chamber 34 through the inlet 31. The inlet 31 is provided on the casing 32. Specifically, the inlet 31 is provided on a second side wall 322 (which will be described below) of the casing 32. The inlet 31 is a through hole passing through a side face of the casing 32. The inlet 31 is provided on an outer peripheral portion of the swirl chamber 34. The inlet 31 is preferably provided such that a flow of gas entering into the swirl chamber 34 is oriented in a circumferential direction of the axis A1 of the internal cylinder 33 so as to produce a swirl flow in the swirl chamber 34. The location and/or angle of the inlet 31 are/is preferably decided in accordance with, for example, results of computer-aided engineering (CAE) analysis (which will be described below with reference to FIG. 5 and FIGS. 6A to 6C).

As illustrated in FIG. 3, the casing 32 has a hollow structure. The casing 32 is rotationally symmetric with respect to the axis A1 of the internal cylinder 33 except for a portion of the casing 32 provided with the inlet 31. An inner wall surface of the casing 32 defines the swirl chamber 34. In the present embodiment, the casing 32 includes an upper wall 32u, a first side wall 321, the second side wall 322, and a tapered side wall 323. The first side wall 321 and the second side wall 322 are an example of a "side wall". As illustrated in FIG. 2, the upper wall 32u has a circular shape in a plan view. As illustrated in FIG. 3, a portion of the internal cylinder 33 along the axis A1 protrudes from a central portion of the upper wall 32u.

As illustrated in FIG. 3, the first side wall 321 extends downward from an outer edge of the upper wall 32u. The first side wall 321 extends along the axis A1. The first side wall 321 has a tubular shape. To be more specific, the first side wall 321 has a substantially cylindrical tubular shape. From the viewpoint of suitably producing a swirl flow in the swirl chamber 34 (or specifically, in a first swirl region 341, which will be described below), the first side wall 321 preferably has a circular shape in cross section perpendicular or substantially perpendicular to the axis A1. The first side wall 321 has a first diameter in the circumferential direction of the axis A1. A lower end of the first side wall 321 is provided with the collecting portion 35 (which will be described below).

The second side wall 322 is indirectly connected to the lower end of the first side wall 321. Specifically, a stepped connection is made between the second side wall 322 and the lower end of the first side wall 321. The second side wall 322 extends along the axis A1. The second side wall 322 has a tubular shape. To be more specific, the second side wall 322 has a substantially cylindrical tubular shape. From the viewpoint of suitably producing a swirl flow in the swirl chamber 34 (or specifically, in a second swirl region 342, which will be described below), the second side wall 322 preferably has a circular shape in cross section perpendicular or substantially perpendicular to the axis A1. The second side wall 322 has a second diameter in the circumferential direction of the axis A1. The second diameter of the second side wall 322 is smaller than the first diameter of the first side wall 321. The second side wall 322 is provided with the inlet 31. A lower end of the second side wall 322 is provided with the collecting portion 36 (which will be described below).

The tapered side wall 323 is indirectly connected to the lower end of the second side wall 322. Specifically, a stepped connection is made between the tapered side wall 323 and the lower end of the second side wall 322. When viewed in cross section, the tapered side wall 323 is an inclined surface that gradually decreases in diameter downward. The tapered side wall 323 has a truncated conical shape. A lower end of the tapered side wall 323 defines the gas discharge port 38 (which will be described below). The tapered side wall 323 is inclined toward the gas discharge port 38. Accordingly, the present embodiment is able to efficiently discharge gas by utilizing a swirl flow.

The internal cylinder 33 extends along the axis A1. The internal cylinder 33 has a constant diameter along the axis A1. The internal cylinder 33 has a cylindrical tubular shape. The internal cylinder 33 is secured to the upper wall 32u of the casing 32. The internal cylinder 33 extends from inside to outside the casing 32. A portion of the internal cylinder 33 along the axis A1 (i.e., an upper end portion of the internal cylinder 33 in FIG. 3) protrudes out of the casing 32, and the other portion of the internal cylinder 33 along the axis A1 is housed in the casing 32. In other words, a first end portion of the internal cylinder 33 along the axis A1 (i.e., the upper end portion of the internal cylinder 33 in FIG. 3) protrudes from the swirl chamber 34, and a second end portion of the internal cylinder 33 along the axis A1 (i.e., a lower end portion of the internal cylinder 33 in FIG. 3) is disposed in the swirl chamber 34 (or specifically, in the second swirl region 342, which will be described below).

An outer wall surface 33a of the internal cylinder 33 defines the swirl chamber 34. Specifically, the outer wall surface 33a of the internal cylinder 33 defines the first swirl region 341 and the second swirl region 342 (which will be described below). The internal cylinder 33 functions as a guide member to produce a swirl flow in the swirl chamber 34 (or specifically, around the outer wall surface 33a of the internal cylinder 33). The outer wall surface 33a of the internal cylinder 33 is provided with a baffle 33b. The baffle 33b is a current plate (or a "baffle board") that defines a passage to cause gas in the swirl chamber 34 to swirl smoothly. The baffle 33b is preferably provided such that a flow of gas in the swirl chamber 34 is oriented in the circumferential direction of the axis A1 of the internal cylinder 33. The baffle 33b extends to a lower end of a communication port 33c of the internal cylinder 33.

The internal cylinder 33 functions as an exhaust passage through which gas in the swirl chamber 34 is to be discharged. Thus, the internal cylinder 33 is hollow. The first and second end portions of the internal cylinder 33 along the axis A1 are each provided with an opening. The first end portion of the internal cylinder 33 along the axis A1 (i.e., an end portion of the internal cylinder 33 protruding from the swirl chamber 34) defines the gas discharge port 37 (which will be described below). The second end portion of the internal cylinder 33 along the axis A1 (i.e., an end portion of the internal cylinder 33 located inside the swirl chamber 34) defines the communication port 33c that allows communication between the inside and outside of the internal cylinder 33. In other words, the communication port 33c allows communication between the inside of the swirl chamber 34 and the inside of the internal cylinder 33. Similarly to the outer wall surface 33a, an inner wall surface of the internal cylinder 33 is provided with the baffle 33b. As indicated by the upward arrow in FIG. 3, gas that has moved from the swirl chamber 34 into the internal cylinder 33 through the communication port 33c is discharged out of the cyclone collector 30 through the gas discharge port 37.

In the swirl chamber 34, a swirl flow is produced by dust-containing gas that has flowed into the swirl chamber 34 through the inlet 31. In the present embodiment, the swirl chamber 34 includes the first swirl region 341 and the second swirl region 342 located coaxially with each other. The first swirl region 341 and the second swirl region 342 are in communication with each other. In this embodiment, the first swirl region 341 and the second swirl region 342 are continuous with each other. In a plan view, the first swirl region 341 and the second swirl region 342 overlap with each other. The second swirl region 342 is located vertically under the first swirl region 341. The first swirl region 341 and the second swirl region 342 differ in height (i.e., differ in length in the up-down direction Z). The first swirl region 341 and the second swirl region 342 differ in the area of cross section perpendicular or substantially perpendicular to the axis A1. In this embodiment, the swirl chamber 34 is divided into the first swirl region 341 and the second swirl region 342. Alternatively, the swirl chamber 34 may be a substantially cylindrical tubular space. In one example, the swirl chamber 34 may include no first swirl region 341. In this case, the swirl chamber 34 may consist of the second swirl region 342.

The first swirl region 341 constitutes an upper portion of the swirl chamber 34. The first swirl region 341 is defined by the upper wall 32u and the first side wall 321 of the casing 32 and the outer wall surface 33a of the internal cylinder 33. The first swirl region 341 is an annular space. The first swirl region 341 is provided above the inlet 31. The first swirl region 341 is smaller in height (i.e., shorter in length in the up-down direction Z) than the second swirl region 342. The first swirl region 341 is larger in cross-sectional area (which is the area of cross section perpendicular or substantially perpendicular to the axis A1) than the second swirl region 342. Thus, in the first swirl region 341, a relatively large centrifugal force may be applied to dust contained in gas. The first swirl region 341 is provided with the collecting portion 35.

The second swirl region 342 constitutes a lower portion of the swirl chamber 34. The second swirl region 342 is defined by the second side wall 322 of the casing 32 and the outer wall surface 33a of the internal cylinder 33. The second swirl region 342 is a substantially annular space. The second swirl region 342 is provided with the inlet 31. The second swirl region 342 is further provided with the collecting portion 36. A region of the swirl chamber 34 relatively close to the internal cylinder 33 may herein be referred to as an "inner peripheral side". A region of the swirl chamber 34 away from the internal cylinder 33 and relatively close to the casing 32 (i.e., the first side wall 321 and/or the second side wall 322) may herein be referred to as an "outer peripheral side".

The collecting portions 35 and 36 collect dust that has been separated from gas by a swirl flow. Specifically, the collecting portions 35 and 36 collect dust that has collided with the inner wall surface of the casing 32 and fallen along the inner wall surface. The collecting portions 35 and 36 each have an annular shape in the plan view. The collecting portions 35 and 36 are disposed coaxially with each other. The cyclone collector 30 includes the two collecting portions 35 and 36 and is thus able to efficiently collect dust. Although the cyclone collector 30 in this embodiment includes the two collecting portions 35 and 36, the cyclone collector 30 may alternatively include a single collecting portion or three or more collecting portions.

The collecting portion 35 is a downwardly depressed portion (or recessed portion) of the first swirl region 341. The collecting portion 35 is a pocket to collect dust raised to the first swirl region 341 by a swirl flow. The collecting portion 35 may collect a larger amount of light dust than the collecting portion 36. The collecting portion 35 is provided below the first side wall 321. In this embodiment, the collecting portion 35 is continuous with the lower end of the first side wall 321. This makes it possible to efficiently collect centrifuged dust. The collecting portion 35 is disposed above the second swirl region 342. The collecting portion 35 is disposed above the inlet 31. The collecting portion 35 is located outward of the collecting portion 36 in the circumferential direction of the axis A1.

The collecting portion 36 is a downwardly depressed portion (or recessed portion) of the second swirl region 342. The collecting portion 36 is a pocket to collect dust lowered in the second swirl region 342 by a swirl flow. The collecting portion 36 may collect a larger amount of heavy dust than the collecting portion 35. The collecting portion 36 is provided below the second side wall 322. In this embodiment, the collecting portion 36 is continuous with the lower end of the second side wall 322. This makes it possible to efficiently collect centrifuged dust. The collecting portion 36 is disposed below the first swirl region 341. The collecting portion 36 is disposed below the inlet 31. The collecting portion 36 is located inward of the collecting portion 35 in the circumferential direction of the axis A1.

Through the gas discharge ports 37 and 38, gas from which dust has been separated by a swirl flow is discharged out of the cyclone collector 30. The gas discharge ports 37 and 38 are respectively provided on upper and lower end portions of the cyclone collector 30 (i.e., first and second end portions of the cyclone collector 30 along the axis A1). Specifically, the gas discharge port 37 is provided above the swirl chamber 34, and the gas discharge port 38 is provided below the swirl chamber 34. This makes it possible to efficiently discharge gas from the cyclone collector 30 by utilizing a swirl flow.

The gas discharge port 37 is provided on the first end portion of the internal cylinder 33 (i.e., the upper end portion of the internal cylinder 33 in FIG. 3). The gas discharge port 37 is an opening facing upward. The gas discharge port 38 is provided on the lower end of the tapered side wall 323 of the casing 32. The gas discharge port 38 is an opening facing downward. When necessary, the gas discharge ports 37 and 38 may each be provided with, for example, a filter and/or a slit. Although the cyclone collector 30 in this embodiment includes the two gas discharge ports 37 and 38, the cyclone collector 30 may alternatively include a single gas discharge port.

### How Air Current Flows in Cyclone Collector

FIG. 4 is a schematic transverse sectional view of the second swirl region 342. As illustrated in FIG. 4, dust-containing gas AF flows from the exhaust duct 20 (see FIG. 1) into the second swirl region 342 through the inlet 31. The gas AF is a very fast air current that may become a subsonic flow. The dust-containing gas AF, which has flowed into the second swirl region 342, is oriented in the circumferential direction of the axis A1 and thus rotates around the axis A1 along the outer wall surface 33a of the internal cylinder 33. As a result, a strong swirl flow is produced in the second swirl region 342.

The arrow in FIG. 4 indicates the gas AF flowing in a substantially full circle in the second swirl region 342. In actuality, however, a strong swirl flow that swirls numerous times is produced in the second swirl region 342 as indicated by the results of CAE analysis (which will be described below with reference to FIG. 5 and FIGS. 6A to 6C). Although the gas AF swirls around the axis A1 in the second swirl region 342, the gas AF continuously flows into the second swirl region 342 through the inlet 31 and thus shifts in a direction along the internal cylinder 33 perpendicular or substantially perpendicular to a plane of rotation while rotating, with the result that the gas AF becomes a swirl flow. Consequently, centrifugal force generated by the swirl flow is not only exerted outward in the circumferential direction of the axis A1 but also exerted in a direction parallel or substantially parallel to the axis A1.

Because a swirl flow is produced from the dust-containing gas AF in the second swirl region 342, dust that is greater in mass than gas has high centrifugal kinetic energy and thus revolves along the outer peripheral side of the second swirl region 342, resulting in collision of the dust with the second side wall 322. The dust that has collided with the second side wall 322 falls along the second side wall 322 owing to gravity and is then collected (or deposited) in the collecting portion 36. In particular, the heavier the dust, the more likely it is for the dust to be collected in the collecting portion 36. Thus, first dust contained in gas is centrifuged.

Some of the dust is moved upward along the internal cylinder 33 by a swirl flow under the influence of lift and/or random motions caused by collision of dust particles with each other, and then reaches the first swirl region 341. In the first swirl region 341, the gas AF rotates around the axis A1 along the outer wall surface 33a of the internal cylinder 33 and thus produces a strong swirl flow as in the second swirl region 342. Because such a swirl flow is produced, dust that is greater in mass than gas revolves along the outer peripheral side of the first swirl region 341, resulting in collision of the dust with the first side wall 321. The dust that has collided with the first side wall 321 falls along the first side wall 321 owing to gravity and is then collected (or deposited) in the collecting portion 35. Thus, second dust contained in gas is centrifuged. The percentage of light dust may be relatively larger in the collecting portion 35 than in the collecting portion 36.

Gas from which dust has been removed in the swirl chamber 34 as described above is moved downward along the internal cylinder 33 by a swirl flow upon reaching the upper wall 32u of the casing 32. Because the swirl flow is under negative pressure on the inner peripheral side of the swirl chamber 34, the gas passing through a portion of the second swirl region 342 adjacent to the internal cylinder 33 is sucked into the internal cylinder 33 through the communication port 33c of the internal cylinder 33. Then, as illustrated in FIG. 3, the gas inside the internal cylinder 33 is discharged out of the cyclone collector 30 through the gas discharge port 37 provided on the first end portion of the internal cylinder 33 (i.e., the upper end portion of the internal cylinder 33 in FIG. 3). The gas passing through a portion of the second swirl region 342 adjacent to the second side wall 322 moves further downward along the tapered side wall 323 and is then discharged out of the cyclone collector 30 through the gas discharge port 38 provided on the lower end of the tapered side wall 323. The present embodiment involves providing the gas discharge ports 37 and 38 above and below the swirl chamber 34, respectively, so as to divert the flow of gas as described above. Accordingly, the present embodiment is able to decrease the flow rate of gas to be discharged per spot and reduce the flow velocity of gas through each discharge port.

When dust-containing gas has issued from the battery cell(s) 12 inside the pack case 14, the battery device 100 typically requires replacement of the cyclone collector 30. Thus, dust collected in the collecting portions 35 and 36 does not need to be removed from the collecting portions 35 and 36.

### Use of Battery Device

The battery device 100 is usable for various purposes. The battery device 100 is suitably installed on, for example, a vehicle (such as a passenger car or a truck). The vehicle may be any type of vehicle, examples of which include: a battery electric vehicle (BEV) whose sole power source is a motor to be operated with electric power supplied from the battery cells 12; and a hybrid electric vehicle (HEV) including an internal combustion engine and a motor to be operated with electric power supplied from the battery cells 12. The hybrid electric vehicle may be a plug-in hybrid electric vehicle (PHEV) that is able to charge the battery cells 12 with an external power supply.

The following description discusses an example of the present disclosure but is not intended to limit the present disclosure to the example.

### Fluid Simulation

Flows of gas and dust were simulated by designing a cyclone collector and conducting a computer-aided engineering (CAE) analysis under the following conditions:
Cyclone Collector
   Material: Cast Iron
   Size of Swirl Chamber: Diameter φ of About 150 mm, and Height of About 200 mm Analysis Conditions
   Analysis Software: STAR-CCM+ (manufactured by Siemens AG)
   Analysis Method: Multiphase Flow Analysis
Dust-Containing Gas
   Flow Velocity of Gas: 100 m/s
   Particle Density of Dust: 2.0 g/cm³
   Particle Diameter of Dust: 40 µm

FIG. 5 is a diagram illustrating flow lines of air currents obtained as a result of the CAE analysis. As illustrated in FIG. 5, under the above conditions, a swirl flow was produced inside the cyclone collector by gas that had flowed into the cyclone collector through its inlet, and the gas was discharged from axial ends of the cyclone collector. FIGS. 6A to 6C are diagrams illustrating flow lines of dust obtained as a result of the CAE analysis. As illustrated in FIGS. 6A to 6C, under the above conditions, dust that had flowed into the cyclone collector (i.e., a swirl chamber) through its inlet (see FIG. 6A) then flowed along the outer peripheral side of the swirl chamber owing to centrifugal force (see FIG. 6B) and was eventually collected in collecting portions (see FIG. 6C).

Although the preferred embodiment of the present disclosure has been described thus far, the foregoing embodiment is only illustrative. The present disclosure may be embodied in various other forms. The present disclosure may be practiced based on the disclosure of this specification and technical common knowledge in the related field. The techniques described in the claims include various changes and modifications made to the embodiment illustrated above.

As described above, specific embodiments of the techniques disclosed herein include those described in items below.

### Item 1

A cyclone collector to be used for a battery pack including battery cells and a pack case housing the battery cells, wherein
the cyclone collector is configured to, when gas containing dust is issued from at least one of the battery cells inside the pack case, cause the gas discharged from the pack case to produce a swirl flow so as to centrifuge and collect the dust contained in the gas.

### Item 2

The cyclone collector according to item 1, including:
a tubular side wall;
an internal cylinder disposed inward of the tubular side wall and including an outer wall surface;
a swirl chamber which is defined by the tubular side wall and the outer wall surface of the internal cylinder and in which a swirl flow is produced along the internal cylinder;
an inlet through which the dust-containing gas flows into the swirl chamber;
at least one collecting portion provided below the side wall, the at least one collecting portion being configured to collect the dust centrifuged from the gas; and
at least one gas discharge port through which the gas having the dust separated therefrom is discharged out of the cyclone collector.

### Item 3

The cyclone collector according to item 2, wherein
the at least one gas discharge port includes a first gas discharge port and a second gas discharge port, and
the first gas discharge port is provided above the swirl chamber, and the second gas discharge port is provided below the swirl chamber.

### Item 4

The cyclone collector according to item 2 or 3, wherein
the internal cylinder is hollow,
a first end portion of the internal cylinder in an axial direction protrudes from the swirl chamber and defines the first gas discharge port,
a second end portion of the internal cylinder in the axial direction is disposed in the swirl chamber and defines a communication port that allows communication between inside of the swirl chamber and inside of the internal cylinder, and
at least some of the gas having the dust separated therefrom is moved into the internal cylinder through the communication port by the swirl flow and is then discharged out of the cyclone collector through the first gas discharge port on the first end portion of the internal cylinder.

### Item 5

The cyclone collector according to any one of items 2 to 4, further including a tapered side wall having a truncated conical shape, the tapered side wall being connected to a lower end of the tubular side wall and gradually reduced in diameter downward, wherein
a lower end of the tapered side wall defines the second gas discharge port, and
at least some of the gas having the dust separated therefrom is discharged out of the cyclone collector through the second gas discharge port on the lower end of the tapered side wall by the swirl flow.

### Item 6

The cyclone collector according to any one of items 2 to 5, wherein
the inlet is provided on the side wall.

### Item 7

The cyclone collector according to any one of items 2 to 6, wherein
the swirl chamber includes a first swirl region and a second swirl region coaxial with the internal cylinder and in communication with each other,
the side wall includes a first side wall and a second side wall,
the first swirl region is defined by the first side wall and the outer wall surface of the internal cylinder,
the second swirl region is defined by the second side wall and the outer wall surface of the internal cylinder and is provided with the inlet,
the at least one collecting portion includes a first collecting portion and a second collecting portion, and
the first collecting portion is provided in the first swirl region, and the second collecting portion is provided in the second swirl region.

### Item 8

The cyclone collector according to item 7, wherein
the second swirl region is located vertically under the first swirl region.

### Item 9

The cyclone collector according to item 7 or 8, wherein
the first swirl region and the second swirl region differ in area of cross section perpendicular or substantially perpendicular to an axis of the internal cylinder.

### Item 10

The cyclone collector according to any one of items 2 to 9, wherein
the at least one collecting portion is continuous with a lower end of the side wall, or the first collecting portion and the second collecting portion are respectively continuous with lower ends of the first side wall and the second side wall.

### Item 11

The cyclone collector according to any one of items 2 to 10, wherein
the at least one collecting portion or each of the first and second collecting portions has an annular shape.

### Item 12

A battery device including:
a battery pack including battery cells and a pack case housing the battery cells; and
the cyclone collector according to any one of items 1 to 11.

### REFERENCE SIGNS LIST

- 10: battery pack
- 12: battery cell
- 14: pack case
- 20: exhaust duct
- 30: cyclone collector
- 31: inlet
- 32: casing
- 321: first side wall
- 322: second side wall
- 323: tapered side wall
- 33: internal cylinder
- 33a: outer wall surface
- 33c: communication port
- 34: swirl chamber
- 341: first swirl region
- 342: second swirl region
- 35,36: collecting portion
- 37, 38: gas discharge port
- 100: battery device
- A1: axis

## Claims

1. A cyclone collector (30) to be used for a battery pack (10) including battery cells (12) and a pack case (14) housing the battery cells (12), wherein
the cyclone collector (30) is configured to, when gas (AF) containing dust is issued from at least one of the battery cells (12) inside the pack case (14), cause the gas (AF) discharged from the pack case (14) to produce a swirl flow so as to centrifuge and collect the dust contained in the gas (AF).

2. The cyclone collector (30) according to claim 1, comprising:
a tubular side wall (321, 322);
an internal cylinder (33) disposed inward of the tubular side wall (321, 322) and including an outer wall surface (33 a);
a swirl chamber (34) which is defined by the tubular side wall (321, 322) and the outer wall surface (33a) of the internal cylinder (33) and in which a swirl flow is produced along the internal cylinder (33);
an inlet (31) through which the dust-containing gas (AF) flows into the swirl chamber (34);
at least one collecting portion (35, 36) provided below the side wall (321, 322), the at least one collecting portion (35, 36) being configured to collect the dust centrifuged from the gas (AF); and
at least one gas discharge port (37, 38) through which the gas having the dust separated therefrom is discharged out of the cyclone collector (30).

3. The cyclone collector (30) according to claim 2, wherein
the at least one gas discharge port (37, 38) includes a first gas discharge port (37) and a second gas discharge port (38), and
the first gas discharge port (37) is provided above the swirl chamber (34), and the second gas discharge port (38) is provided below the swirl chamber (34).

4. The cyclone collector (30) according to claim 2 or 3, wherein
the internal cylinder (33) is hollow,
a first end portion of the internal cylinder (33) in an axial direction protrudes from the swirl chamber (34) and defines the first gas discharge port (37),
a second end portion of the internal cylinder (33) in the axial direction is disposed in the swirl chamber (34) and defines a communication port (33c) that allows communication between inside of the swirl chamber (34) and inside of the internal cylinder (33), and
at least some of the gas having the dust separated therefrom is moved into the internal cylinder (33) through the communication port (33c) by the swirl flow and is then discharged out of the cyclone collector (30) through the first gas discharge port (37) on the first end portion of the internal cylinder (33).

5. The cyclone collector (30) according to any one of claims 2 to 4, further comprising a tapered side wall (323) having a truncated conical shape, the tapered side wall (323) being connected to a lower end of the tubular side wall (321, 322) and gradually reduced in diameter downward, wherein
a lower end of the tapered side wall (323) defines the second gas discharge port (38), and
at least some of the gas having the dust separated therefrom is discharged out of the cyclone collector (30) through the second gas discharge port (38) on the lower end of the tapered side wall (323) by the swirl flow.

6. The cyclone collector (30) according to any one of claims 2 to 5, wherein
the inlet (31) is provided on the side wall (321, 322).

7. The cyclone collector (30) according to any one of claims 2 to 6, wherein
the swirl chamber (34) includes a first swirl region (341) and a second swirl region (342) coaxial with the internal cylinder (33) and in communication with each other,
the side wall (321, 322) includes a first side wall (321) and a second side wall (322),
the first swirl region (341) is defined by the first side wall (321) and the outer wall surface (33a) of the internal cylinder (33),
the second swirl region (342) is defined by the second side wall (322) and the outer wall surface (33a) of the internal cylinder (33) and is provided with the inlet (31),
the at least one collecting portion (35, 36) includes a first collecting portion (35) and a second collecting portion (36), and
the first collecting portion (35) is provided in the first swirl region (341), and the second collecting portion (36) is provided in the second swirl region (342).

8. The cyclone collector (30) according to claim 7, wherein
the second swirl region (342) is located vertically under the first swirl region (341).

9. The cyclone collector (30) according to claim 7 or 8, wherein
the first swirl region (341) and the second swirl region (342) differ in area of cross section perpendicular or substantially perpendicular to an axis (A1) of the internal cylinder (33).

10. The cyclone collector (30) according to any one of claims 2 to 9, wherein
the at least one collecting portion (35, 36) is continuous with a lower end of the side wall (321, 322), or the first collecting portion (35) and the second collecting portion (36) are respectively continuous with lower ends of the first side wall (321) and the second side wall (322).

11. The cyclone collector (30) according to any one of claims 2 to 10, wherein
the at least one collecting portion (35, 36) or each of the first and second collecting portions (35, 36) has an annular shape.

12. A battery device (100) comprising:
a battery pack (10) including battery cells (12) and a pack case (14) housing the battery cells (12); and
the cyclone collector (30) according to any one of claims 1 to 11.
